# EUROPEAN PATENT APPLICATION

(11) **EP 0 892 222 A2**
(43) Date of publication of application: **20.01.1999**
(21) Application number: 98610018.8
(22) Date of filing: 22.06.1998
(51) Int. Cl.: F24D 3/14, F28D 1/03

(54) **Convector installation for rooms in buildings**

(30) Priority: 04.07.1997 DK 79797
(71) Applicant: Meinertz, Sonni, 6005 St. Niklausen/LU (CH)
(72) Inventor: Emdal, Hans, 8752 Ostbirk (DK)
(74) Representative: Skoett-Jensen, Knud

(57) **Abstract**

With convector installations in the floors of buildings, normally directly on the inside of an outer wall (2) of glass, it is customary for a convector element (10) to be placed in a floor channel (6), and for this channel (6) to be covered with a tread-grid (12) at floor level. In order to work effectively, the convector element (10) must be of a certain height, which traditionally means that the floor channel (6) must be so deep that it is necessary to effect a local lowering of the underside of the storey separation (4) in which the installation is to be carried out, which is hardly desirable. With the invention, this is avoided in that the convector element (10) in itself is configured with an upperside which enables it to serve as a presentable tread-grid (12), whereby the element can be mounted with its upperside at floor level and thus not down under an overlying, separate grid, thus hereby enabling the depth of the channel to be minimised.

## Description

The present invention concerns a heat-producing convector installation for rooms in buildings, and more precisely such an installation whereby a heat-producing convector element is placed in a countersunk position in a floor channel, which in many cases will be provided in a storey separation. It is desirable, particularly in connection with walls of glass, to work with floor-mounted convectors to counteract the down-flow of cold air, and consequently it is also natural to choose convectors of low height in order to retain the visual impression of the full glass wall all the way down to the floor. However, even a low convector mounted on the floor will break the view of the full glass wall, and will also effectively occupy floor space, and it is precisely for this reason that the development of these installations has been towards the mounting of the convectors in floor channels covered by a suitable grid, which in the floor plane makes it possible for this area to be walked upon while allowing an up-flow of warm air from the convector and - at one or both sides of the convector - also a down-flow of cooler room air to the underside of the convector.

The floor channel must thus be of a breadth which is sufficient to accommodate both the breadth of the convector and a further suitable air down-flow breadth through which the air at the floor can be drawn down by the underpressure which the convector creates lowermost in the channel, from where it creates a rising flow of air which seeks upwards due to the heat introduced by the convector. The overall breadth of the floor channel can be kept more or less small, so that no special problem arises in covering it with a supporting and suitably air-permeable grid with a neutral, uniform appearance.

Seen from the above, nor is it particularly problematic to work with any necessary depth of floor channel corresponding to a desired convector height. In that it is not required for the channel to be particularly broad in order to avoid problems with regard to the breadth of the grid covering which, of course, must not be covered by, e.g. floor carpeting, the convector must, however, be of an appreciable height in order to work effectively, and the floor channel must therefore be of additional depth so that it provides free height both for the free space necessary under the convector and the space required for the mounting above the convector of the covering grid flush with the floor.

In practice, these mounting conditions manifest themselves in that normal storey separations are not of sufficient height to enable floor channels of the necessary depth to be used, i.e. the storey separation has to be configured with a lower thickness which, seen from the floor below, is not particularly attractive, regardless of whether advantage can thus be gained in the same lower floor from an effective convector installation below floor level and with a grid of modest breadth.

With the present invention it is realised that these mounting conditions can be changed to a considerable degree, whereby the convector in itself is configured and positioned in such a way that its own upper side can be disposed at floor level in the manner of a supportive grid. The convector will quite typically be configured from mutually-separable element parts such as parallel ducts which almost per definition will appear with an upper "bar-grid" surface, and which can easily be dimensioned and surface-treated to form a fully visible and supportive grid structure at floor level, and which thus to the one side or preferably both sides can be supplemented with further grid parts which can cover the adjacent area for the induction of floor air to the underside of the convector. If desired, this or these additional grid parts can be configured with quite the same structure as the upper side of the convector, so that the whole of the grid structure will be seen to have a completely uniform appearance, though without this being any kind of precondition for the invention.

The most important aspect is that the height of the convector can be increased because its upper side can be brought right up to floor level, in that it is ascertained that it is hereby possible, at any rate in most cases, to hold the floor channel at so low a depth that there is room for it in the storey separation without this requiring any thickening. In the remaining cases, the use of the invention will mean that a necessary thickening can be reduced, which is also of considerable importance. Moreover, it will generally apply that savings can be made in floor-grid material, since the convector itself will constitute a part of the grid.

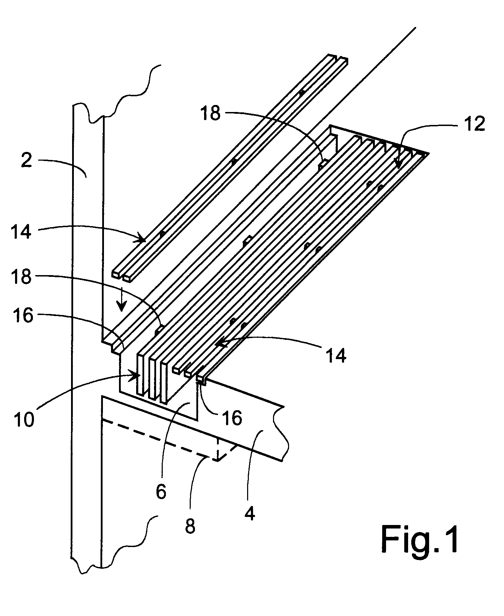

An example embodiment of the invention is illustrated in the drawing, which is a cross-sectional perspective view showing an outer wall 2 which, in a manner not shown, is preferably configured as a glass facade, and a storey separation 4. The latter is provided with a convector channel 6 and, as shown by the stippled line 8, it is herewith customary for the storey separation 4 to have a thickening underneath this channel, the reason being that the channel has normally been deeper. A convector element 10 is placed in the channel, and the channel is covered at the top with a grid structure 12 with its upper side at floor level.

According to the invention, the grid structure 12 is formed by the upper side of the convector 10 itself, in that this is mounted in a fixed and supported position such that its upper side, which has a slat-like appearance, lies in the plane of the floor and is fully supportive as a part of the floor surface. The necessary free space at the one or preferably both sides of the convector is covered by a separate grid element 14, which can expediently appear with quite the same slat-like structure as the upper side of the convector, though without this being any kind of absolute precondition.

The separate grid elements 14 can be supported on the edge recesses 16 along the edges of the floor channel 6 and on the support flanges 18 extending from the sides of the convector 10. They can possibly be supported directly against the floor surface without use of the recesses 16 but, e.g. by using height-adjustable support legs, i.e. so that the surface of the grid - and herewith also the upper side of the convector - will lie raised above the floor surface by an amount which more or less corresponds to the thickness of a floor covering on said surface. It will be understood that this will involve an even higher-lying mounting of the convector 10 itself, and herewith a corresponding, improved possibility for the total omission of the thickening 8 of the storey separation 4, or at any rate an appreciable reduction in the thickness hereof.

## Claims

1. Heat-producing convector installation for rooms in buildings, whereby a convector element is placed in a countersunk position in a floor channel which is covered at the top with a tread-grid, whereby continuous convection is made possible by the down-flow of cold air along the sides of the convector element and an up-flow of warm air from said element, **characterized** in that the convector element in itself is configured with an upper side of such a nature that this is directly usable as a presentable tread-grid, and that the convector element is mounted with this upper side at floor level, in that supplementary grid parts at the one or both sides of the convector element are preferably configured with a quite corresponding upper-side pattern.

2. Convector installation according to claim 1, where the floor channel is provided in a storey separation, **characterized** in that the convector is configured with conventional building height, and that the depth of the floor channel is less than the thickness of the story separation, so that the underside of this extends in an even manner also in the area directly under the floor channel.

3. Convector element for use in an installation according to claim 1, **characterized** in that it is formed with upper-side parts which together appear as a presentable tread-grid.

4. Convector element according to claim 3, **characterized** in that it is configured with laterally-projecting support parts for the edge of a supplementary tread-grid element for the filling-out of a free space which arises between the convector element and an oppositely-standing wall of the floor channel.

5. Tread-grid element for use in an installation according to claim 1 together with a convector element according to claim 3, **characterized** in that it is dimensioned solely to fill out the free breadth between the convector element and an oppositely-standing wall of the floor channel.

6. Tread-grid according to claim 5, **characterized** in that it is configured with the same surface character as the convector element according to claim 3.
